**Europäisches Patentamt**

**European Patent Office**

**Office européen des brevets**

(19)

(11) Veröffentlichungsnummer: **0 158 085**
**B1**

# EUROPÄISCHE PATENTSCHRIFT

(12)

(45) Veröffentlichungstag der Patentschrift:
**18.01.89**

(21) Anmeldenummer: **85102125.3**

(22) Anmeldetag: **27.02.85**

(51) Int. Cl.⁴: **B 29 C 59/02,** B 29 C 59/04,
B 29 C 33/42, A 47 K 3/22

(54) Vorrichtung zur Herstellung von Platten sowie mittels der Vorrichtung hergestellte Platten.

(30) Priorität: **08.03.84 DE 3408419**
**08.03.84 DE 3408420**

(43) Veröffentlichungstag der Anmeldung:
**16.10.85 Patentblatt 85/42**

(45) Bekanntmachung des Hinweises auf die Patenterteilung:
**18.01.89 Patentblatt 89/3**

(84) Benannte Vertragsstaaten:
**AT BE CH DE FR GB IT LI NL SE**

(56) Entgegenhaltungen:
**AT-B- 312 544**
**DE-A- 1 779 204**
**DE-A- 2 026 427**
**DE-B- 2 125 343**
**FR-A- 1 264 284**
**FR-A- 1 583 776**
**US-A- 2 914 109**
**US-A- 3 268 378**
**US-A- 3 536 290**

(73) Patentinhaber: **Baus, Heinz Georg,**
**Wartbodenstrasse 35, CH-3626 Hünibach-Thun (CH)**

(72) Erfinder: **Baus, Heinz Georg, Wartbodenstrasse 35,**
**CH-3626 Hünibach-Thun (CH)**

(74) Vertreter: **Klose, Hans, Dipl.-Phys. et al,**
**Kurfürstenstrasse 32, D-6700 Ludwigshafen (DE)**

**Beschreibung**

Die Erfindung bezieht sich auf eine Vorrichtung zur Herstellung von Platten gemäss den im Oberbegriff des Patentanspruchs 1 angegebenen Merkmalen.

Aus der DE-A-3 135 628 ist eine derartige Vorrichtung bekannt, welche in der Aussenfläche in einer vorgegebenen räumlichen Zuordnung nach innen gerichtete Senken aufweist. Diese Vorrichtung kann im übrigen eine glatt polierte Aussenfläche aufweisen, damit die mittels der Vorrichtung gefertigte Platte gleichfalls eine glatte Oberfläche aufweisen kann. Mit den von der Aussenfläche aus nach innen gerichteten Senken werden in der Platte tropfen- oder perlenartige Strukturen erzeugt, welche über die Oberfläche der Platte vorstehen. Bei solchen Platten besteht das Problem einer dichten Verbindung und Anordnung im Profilrahmen, wie es insbesondere bei Duschtrennwänden gefordert wird. Derartige als Perlen oder Tropfen wirkende Strukturen ragen in der Praxis etwa 0,6 mm über die Oberfläche der Platte hinaus, so dass geeignete Dichtungsprofile aus einem elastomeren Werkstoff zwischen Profilrahmen und Platte vorzusehen sind. Um eine gute Abdichtung zu erhalten und ferner auch einen festen Sitz der Platte in einem Profilrahmen zu gewährleisten, ist ein vergleichsweise grosser Fertigungsaufwand erforderlich. Da die perlen- oder tropfenartigen Strukturen über die Oberfläche der Platte hinausragen, können in Verbindung mit Profilschienen vergleichsweise hohe Flächenpressungen und in der Folge Beschädigungen auftreten. Die Fertigungstoleranzen müssen in engen Grenzen eingehalten werden, um einerseits einen dichten und festen Sitz zu erhalten und andererseits keine zu hohen Flächenpressungen zu erreichen.

Aus der US-A-3 268 378 ist eine Vorrichtung zum Bearbeiten von Aluminiumblech nachgewiesen. Diese Vorrichtung enthält zwei Walzen, wobei die eine Walze Vertiefungen und die andere Walze entsprechende Vorsprünge aufweisen, um in das Blech entsprechende Erhebungen mit aufgerauhter Oberfläche einzubringen. Die Oberfläche des Aluminiumbleches soll poliert sein und mittels den vorstehenden Vorsprüngen mit aufgerauhter Oberfläche soll ein Verkratzen der übrigen Bereiche der Oberfläche vermieden werden, wie es bei Verwendung als Trittbrett, Trittfläche oder ähnliches im Automobilbau und sonsten der Fall wäre. Die vorstehenden Stirnflächen der genannten Vorsprünge sind im wesentlichen eben ausgebildet und aufgerauht.

Der Erfindung liegt die Aufgabe zugrunde, die Vorrichtung der eingangs genannten Art mit geringem konstruktiven Aufwand dahingehend weiterzubilden, dass mit ihr Platten zuverlässig erzeugt werden können, deren tropfen- oder perlenartige Strukturen unterhalb der Plattenoberfläche liegen, wobei im übrigen die Oberflächenbeschaffenheit vorgebbar ist.

Zur Lösung dieser Aufgabe werden bei einer Vorrichtung der eingangs genannten Gattung die kennzeichnenden Merkmale des Anspruchs 1 vorgeschlagen.

Die vorgeschlagene Vorrichtung weist eine einfache Konstruktion auf und ermöglicht die problemlose Herstellung von Platten, deren tropfen- oder perlenartige Strukturen nicht über die Plattenoberfläche vorstehen. Die über die Aussenfläche vorstehenden Bolzen können in der gewünschten räumlichen Zuordnung auf der Aussenfläche angeordnet werden, wobei mittels den nach innen gerichteten Senken in den äusseren Stirnflächen der Bolzen die genannten Strukturen in der Platte zuverlässig erzeugt werden können. Die am weitesten nach innen gerichteten Teile der Senken reichen höchstens bis zur Aussenfläche der Vorrichtung, so dass die tropfen- oder perlenartige Strukturen in Vertiefungen der Platte liegen und nicht über die Oberfläche der Platte vorstehen. Die Bolzen können einen zylindrischen oder ovalen Querschnitt aufweisen, wobei die Vorrichtung ohne weiteres eine Vielzahl von unterschiedlich ausgebildeten Bolzen aufweisen kann. Die Höhe der über die Aussenfläche vorstehenden Bolzen wird im Hinblick auf die Festigkeit der Platte maximal auf 40% der Wandstärke der Platte vorgegeben.

In einer besonderen Ausgestaltung werden die Bolzen auf der fertig bearbeiteten Aussenfläche befestigt, wobei die Befestigung insbesondere durch Schweissen, Löten, Einpressen oder Schrauben in Ausnehmungen der Aussenfläche erfolgt. Die fertig bearbeitete Aussenfläche kann zweckmässig geschlichtet, feinst gedreht oder hochglanzpoliert sein, so dass die Oberfläche der Platte eine hohe Oberflächengüte aufweist. Die Aussenfläche der Vorrichtung kann in einfacher Weise mit der erforderlichen Oberflächengüte vorgefertigt werden.

Eine besondere Ausführungsform ist dadurch gekennzeichnet, dass der Bolzen mit einem Aussengewinde in das Innengewinde der Ausnehmung eingeschraubt ist und mit einem Teil einer zylindrischen Fläche in das Innengewinde eingepresst ist, dessen Länge grösser ist als die Länge des Aussengewindes. Beim Einschrauben wird der Bolzen zunächst mit seinem Aussengewinde in das Innengewinde der Ausnehmung so lange eingeschraubt, bis die an das Aussengewinde anschliessende zylindrische Fläche das Innengewinde erreicht. Beim weiteren Einschrauben des Bolzen wird auch die zylindrische Fläche in das Innengewinde eingezogen und dort eingepresst. In einfacher Weise wird eine zuverlässige Fixierung des Bolzens sichergestellt.

Eine andere Ausgestaltung ist dadurch gekennzeichnet, dass die Bolzen durch teilweises Abtragen einer ersten Aussenfläche bis zu der genannten Aussenfläche der Vorrichtung hergestellt sind. Eine solche Vorrichtung kann mit einem wirtschaftlich vertretbaren Aufwand gefertigt werden, wobei die Bolzen ohne besondere Schwierigkeiten die vorgegebene Zuordnung zueinander aufweisen. Das Abtragen der ersten Aussenfläche kann durch Ätzen oder vergleichbares Verfahren erfolgen, wobei die Bolzen in einfacher Weise stehengelassen werden.

Um ein einfaches Einschrauben bzw. Einsetzen der Bolzen zu ermöglichen, weist der Bolzen zunächst eine grössere Länge auf, als es im Hinblick auf Höhe erforderlich wäre. Mit Werkzeugen kann daher der Bolzen zuverlässig erfasst werden, ohne dass beim Einschrauben bzw. Einsetzen eine Beschädigung der Aussenfläche der Vorrichtung zu befürchten wäre. Nach dem Einschrauben wird der über die Aussenfläche vorstehende Bolzen auf die gewünschte Höhe gekürzt. Danach kann der stehengebliebene Stumpf in seiner Stirnfläche in der gewünschten Weise mit einer Senke versehen werden.

Um mit einem geringen Fertigungsaufwand die Senken in den Bolzen anzuordnen, werden diese Senken durch Einschlagen oder Pressen eines Körners, Pressstempels, Niethammers oder dergleichen eingebracht. Das Einbringen der Senken wird mit einem äusserst geringen apparativen Aufwand durchgeführt, wobei durch entsprechende Vorgaben der Einschlag- oder Einpresskraft die erforderliche Tiefe der Senke erreicht wird.

In einer zweckmässigen Ausgestaltung weisen die Bolzen eine über die Aussenfläche vorstehende Höhe auf, die 2 mm, bevorzugt 0,6 bis 0,8 mm, gross ist und bis zu 40% der Dicke der herzustellenden Platte beträgt. Ferner ist der Durchmesser bzw. die Breite maximal bis 60 mm, bevorzugt 20 mm und insbesondere von 3 bis 9 mm gross. Obgleich die Bolzen bevorzugt zylindrisch ausgebildet sind, können sie auch andere Querschnittsformen aufweisen.

Die mittels der Vorrichtung hergestellte Platte weist in ihrer Oberfläche, welche insbesondere auf Hochglanz poliert ist, Vertiefungen auf, deren Bodenflächen zwecks Bildung der genannten linsenähnlichen Bereiche nach oben gewölbt sind, wobei der am weitesten nach oben gewölbte Teil zumindest näherungsweise in oder unterhalb der Oberfläche der Platte liegt. Da die Aussenfläche der zur Herstellung vorgesehenen Vorrichtung ohne Schwierigkeiten glatt poliert werden kann, und zwar bevor die Bolzen eingesetzt werden, weist die Oberfläche der Platte dementsprechend eine sehr glatte und plane Oberfläche auf. Unebenheiten oder sonstige Unregelmässigkeiten, welche eine Verschlechterung der Oberflächengüte der Platten bedeuten, werden in besonders zweckmässiger Weise vermieden.

Die Platte gelangt bevorzugt mit Duschtrennwänden zum Einsatz, wobei die Ränder der Platte mittels Profilschienen eingefasst sind und in Nuten derselben eingreifen. Die perlenähnlichen oder strukturierten Bereiche befinden sich bei der Platte in Vertiefungen unter der Oberfläche, so dass die Platte mit ihrer Oberfläche plan an der Nutwand einer Profilschiene anliegt. Eine grösstmögliche Dichtheit und feste Anlage ist gewährleistet. Die Dichtheit wird auch nicht durch diese Vertiefungen selbst in Frage gestellt, zumal die Breite bzw. der Durchmesser der oben erläuterten Bolzen und somit auch der Vertiefungen der Platte auf die Tiefe der Nutwand abgestimmt sind; die Breite bzw. der Durchmesser der Vertiefung ist kleiner als die anliegende Nutwand. Aufgrund der oben erläuterten Dimensionierung der Bolzen der Vorrichtung weisen die Vertiefungen der Platte entsprechende Abmessungen auf. Die derart ausgebildete Platte kann ohne Schwierigkeiten gereinigt werden und entspricht den Anforderungen an die Hygiene. Die Vertiefungen weisen zweckmässig eine maximale Tiefe von 0,6–0,8 mm auf. Bei derart ausgestalteten Vertiefungen ergeben die nach oben gewölbte Bodenfläche in optimaler Weise eine Struktur ähnlich von Wassertropfen, wobei jedoch die Gefahr von Verschmutzungen in Folge von Kalkablagerungen oder Seifenresten relativ gering ist.

Die Erfindung soll nachfolgend an Hand der in der Zeichnung dargestellten Ausführungsbeispiele näher erläutert werden. Es zeigen:

Fig. 1 schematisch die als Walze ausgebildete Vorrichtung,

Fig. 2 vergrössert einen Schnitt durch die Oberfläche der Walze gemäss Fig. 1,

Fig. 3 einen Schnitt ähnlich Fig. 2, jedoch durch eine andere Ausführungsform der Walze,

Fig. 4 schematisch eine Duschtrennwand, deren Türelemente Platten mit Vertiefungen aufweist,

Fig. 5 einen Schnitt entlang Schnittlinie V durch einen Teil einer Platte, die mit ihrem Rand in eine Profilschiene eingesetzt ist,

Fig. 6 schematisch eine Walzenanordnung mit einer Walze gemäss Fig. 1.

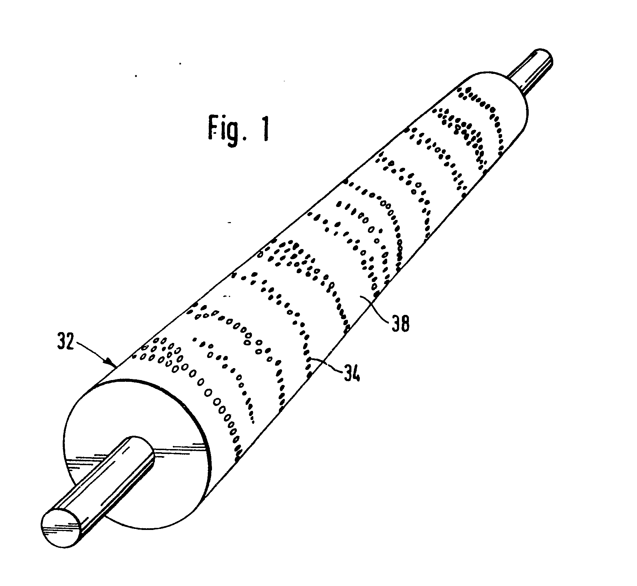

Fig. 1 zeigt schematisch die Vorrichtung, welche als eine Walze 32 mit Prägeelementen in Form von Bolzen 34 ausgebildet ist, die über die zylindrische Aussenfläche 38 hervorstehen. Es ist eine Vielzahl von derartigen Bolzen 34 in einer bestimmten geometrischen Zuordnung zueinander derart vorgesehen, dass eine mittels der Walze hergestellte Platte Vertiefungen nach Art von Wassertropfen aufweist, welche in vertikaler Richtung auf der Oberfläche abperlen. Die Aussenfläche 38 der Walze 32 ist auf Hochglanz poliert.

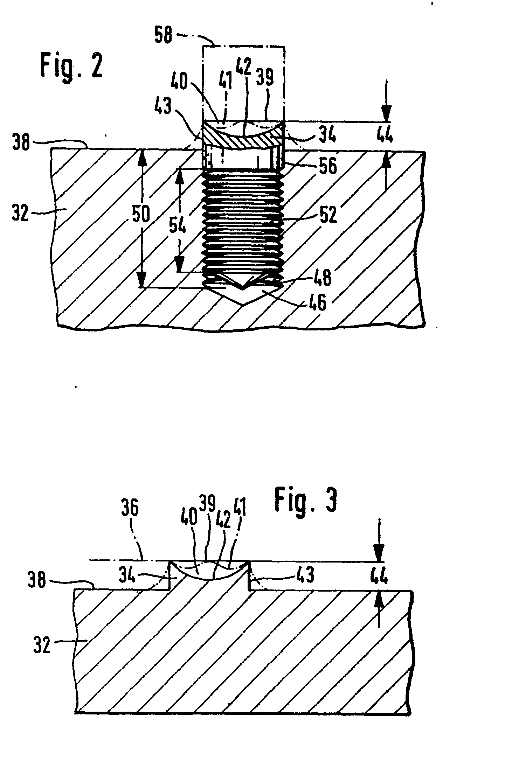

Fig. 2 zeigt schematisch einen Ausschnitt der Aussenfläche 38 mit einem Bolzen 34. Der Bolzen 34 ragt über die Aussenfläche 38 und enthält auf seiner radial nach aussen gerichteten Stirnfläche 39 eine Senke 40. Anstelle der dargestellten Senke kann auch eine andere Struktur oder ein Ornament oder dergl. in der Stirnfläche 39 vorgesehen sein, wie es durch die gestrichelten Linien 41 angedeutet ist. Ferner kann auch die Seitenwand 43 des Prägeelement bzw. des Bolzens 34 eine andere Kontur aufweisen, wie es durch gestrichelte Linien angedeutet ist. Der radial am weitesten nach innen abgesenkte Teil 42 befindet sich oberhalb der Aussenfläche. Es liegt der abgesenkte Teil 42 höchstens näherungsweise in der gleichen Höhe wie die Aussenfläche 38. Der Bolzen 34 steht mit der Höhe 44 über die Aussenfläche 38 vor. Die Höhe 44 ist maximal 40% der Wanddicke der zu fertigenden Platte und liegt in der Regel im Bereich von 2 mm, bevorzugt bei 0,6 bis 0,8 mm. Der über die Aussenfläche 38 hervorstehende Teil des Bolzens ist bevorzugt zylindrisch ausgestaltet, doch er kann auch einen ovalen oder ähnlich ausgestalteten Querschnitt aufweisen.

Die Walze 32 weist im Bereich der Aussenfläche eine Ausnehmung 46 auf, welche mit einem Innengewinde 48 versehen ist, wobei eine Gewindelänge 50 vorgegeben ist. Der Bolzen 34 ist mit seinem Aussengewinde 52 in die Ausnehmung eingeschraubt, wobei jedoch dessen Länge 54 kleiner ist als die Gewindelänge 50. Der Bolzen 34 ist mit einem kleinen Teil 56 seiner zylindrischen Aussenfläche in das Innengewinde 48 der Ausnehmung 46 eingezogen worden und sitzt somit fest in der Ausnehmung 46. Eine Vielzahl derartiger Bolzen ist in Ausnehmungen der glatt polierten Aussenfläche 38 eingesetzt. Bei der Herstellung werden die Ausnehmungen als Bohrungen an der gewünschten Stelle in die Aussenflächen 38 eingebracht, wobei auch die erforderlichen Gewinde 48 geschnitten werden. Wie aus Fig. 1 ersichtlich, können die verschiedenen Bolzen unterschiedliche Abmessungen aufweisen. Die Höhe der Bolzen beträgt maximal etwa 0,6 bis 0,8 mm. Damit beim Einschrauben der Bolzen 34 die glatt polierte Aussenfläche 38 nicht beschädigt wird, weisen die Bolzen 34 zunächst eine erheblich grössere Länge auf, wie es durch die strichpunktierten Linien 58 angedeutet ist. Mittels geeigneten Werkzeugen kann ein Bolzen erfasst und in die Walze eingeschraubt werden. Danach wird der Bolzen auf die gewünschte Höhe 44 gekürzt. Schliesslich wird die Senke 40 durch Einschlagen oder Einpressen eines geeigneten Werkzeuges in die Stirnfläche eingebracht.

Fig. 3 zeigt einen Schnitt durch eine andere Ausführungsform, bei welcher der Bolzen 34 durch Abtragen bestimmter Bereiche der Walze hergestellt ist. Wesentlich ist auch hierbei, dass der am meisten nach innen abgesenkte Teil 42 des Bolzens 34 höchstens auf der Höhe der Aussenfläche 38 der Walze 32 sich befindet. Anstelle der Walze auch eine Presse, Giessform oder Matrize vorgesehen sein. Die zunächst vorhandene erste Aussenfläche 36, welche in der Figur 3 durch die strichpunktierte Linie angedeutet ist, wird in geeigneter Weise abgetragen. Beim Abtragen werden bestimmte Bereiche stehengelassen, welche die Bolzen 34 bilden. Die Walze, bzw. allgemein das Formgebungswerkzeug, weist somit nach dem Abtragen eine zweite, entsprechend tiefer liegende Aussenfläche 38 auf, über welche die Bolzen 34 hervorstehen. Die Senken werden nachfolgend in die Stirnflächen der stehengebliebenen Bolzen 34 eingebracht. Dies erfolgt durch Einschlagen oder Pressen eines geeigneten Werkzeuges, genannt sei hier insbesondere ein Körner, Pressstempel oder Niethammer. Durch die Stärke der Einschlag- oder Einpresskraft sowie deren Richtung lässt sich die Formgebung der Senken 40 in der gewünschten Weise vorgeben. Es ist ersichtlich, dass somit in der zu fertigenden Platte die Form der perlenähnlichen Bereiche, bzw. der Bodenflächen der Vertiefungen vorgegeben werden können.

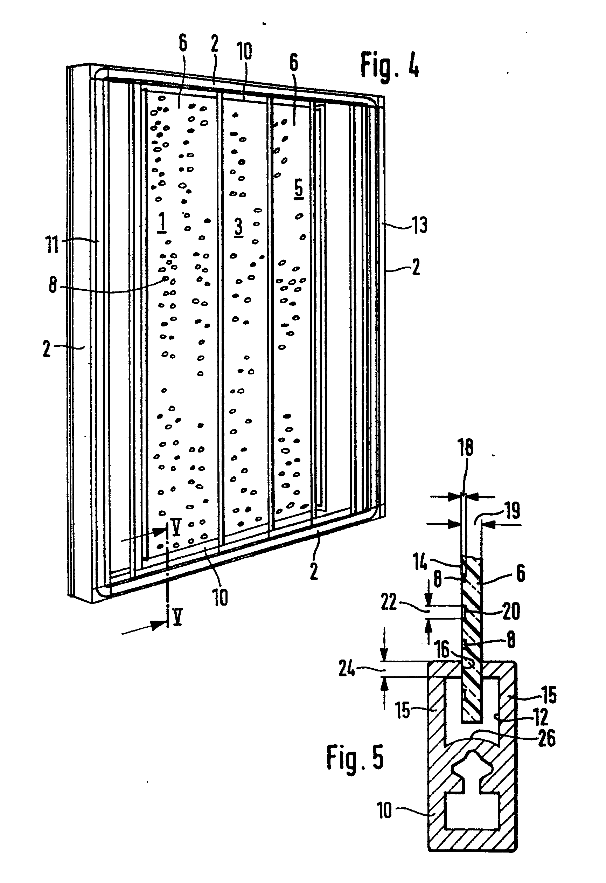

Fig. 4 zeigt schematisch eine Ansicht auf eine Duschtrennwand, die einen Rahmen aus vier jeweils rechtwinkelig zueinander angeordneten Rahmenprofilen 2 aufweist. Längs des oberen horizontalen Rahmenprofils 2 sind drei Türelemente 1, 3, 5 verschiebbar angeordnet, wobei hier nicht weiter dargestellte Führungsmittel in Form von Rollen oder ähnlichem vorhanden sind. Durch Verschieben der Türelemente 1, 3, 5 kann der Durchgang durch den Rahmen zu einer Duschwanne oder dergleichen bei Bedarf freigegeben oder abgesperrt werden. Diese Türelemente 1, 3, 5 enthalten jeweils Platten 6, bevorzugt aus thermoplastischem Kunststoff, in deren Oberfläche 14 Vertiefungen 8 vorgesehen sind. Diese Platten sind mit der oben erläuterten Vorrichtung hergestellt. Die Vertiefungen 8 sind zwecks besserer Darstellung vergrössert dargestellt und sie erscheinen einem Betrachter ähnlich wie Wassertropfen. Die Türelemente 1, 3, 5 enthalten ferner Rahmen aus jeweils vier rechtwinkelig zueinander angeordneten Profilschienen 10, in welchen die Platten 6 gehaltert sind. In die Sichtflächen 13 der Rahmenprofile 2 sind Verblendungsprofile 11 eingesetzt. Bei der Duschtrennwand können die vorgeschlagenen Platten nicht nur, wie dargestellt, in den Türelementen, sondern auch in sogenannten Seitenwänden angeordnet sein, die links / oder rechts an die vertikalen Rahmenprofile 2 in bekannter Weise angeschlossen sind. Besonders bei derartigen Seitenwänden ist eine dichte und in jeder Hinsicht feste Anordnung der Platten erforderlich, damit das Heraustreten von Wasser unter allen Bedingungen zuverlässig vermieden wird. Die vorgeschlagenen Platten bestehen ferner aus einem transparenten Kunststoff. Bei den genannten Seitenwänden sind die zur Aufnahme der Platte vorgesehenen Profilschienen gleichzeitig auch als Rahmenprofile ausgebildet, um eine stabile, den statischen Anforderungen entsprechende Konstruktion zu erhalten.

Fig. 5 zeigt vergrössert einen Ausschnitt des Randbereiches der Platte 6 aus einem thermoplastischen Kunststoff. Die Platte 6 ist mit ihrem Rand in eine Nut 12 der Profilschiene 10 eingesetzt und liegt mit ihrer Oberfläche 14 unmittelbar an einer Nutwand 16 an. Die Profilschiene 10 ist als ein Klemmprofil ausgebildet, d. h. die Platte 6 ist zwischen die beiden Schenkel 15 mit den Nutwänden 16 eingeklemmt. Die Platte 6 weist Vertiefungen 8 auf, welche mittels der oben erläuterten Bolzen erzeugt wurden. Die Vertiefung 8 weist eine Tiefe 18 auf, die etwa zwischen 0,6 und 0,8 mm liegt. Die Tiefe 18 beträgt maximal 40% der Wandstärke 19 der Platte 6. Die Bodenfläche 20 ist in Richtung zur Oberfläche 14 nach oben gewölbt, und zwar entsprechend der eingangs erläuterten Senke im Bolzen. Der am weitesten nach oben aufgewölbte Teil der Bodenfläche 20 ragt höchstens bis zur Oberfläche 14. Die Vertiefung 8 kann bei Blickrichtung auf die Oberfläche 14 sowohl kreisförmig als auch mit einer ovalen oder vergleichbaren Kontur ausgestaltet sein. So kann zwecks Nachbildung eines an der Oberfläche 14 befindlichen Wassertropfens die Breite der Vertiefung in vertikaler Richtung am grössten vorgegeben sein. Die Vertiefung 8 weist einen Durchmesser 22 bzw. eine Breite im Bereich zwischen 3 bis 9 mm auf. Die Tiefe 24 der Nutwand 16, mit welcher dieselbe an der Platte 6 anliegt, ist grösser vorgegeben als der Durchmesser 22 bzw. die grösste Breite der Vertiefung 8. In allen Fällen wird somit eine zuverlässige Abdichtung gewährleistet. Anderenfalls könnte Wasser durch die Vertiefung nach unten zum Boden 26 der Nut 12 gelangen und senkrecht zur Zeichenebene in Richtung der Profilschiene 10 fliessen, um am Ende der Profilschiene auszutreten.

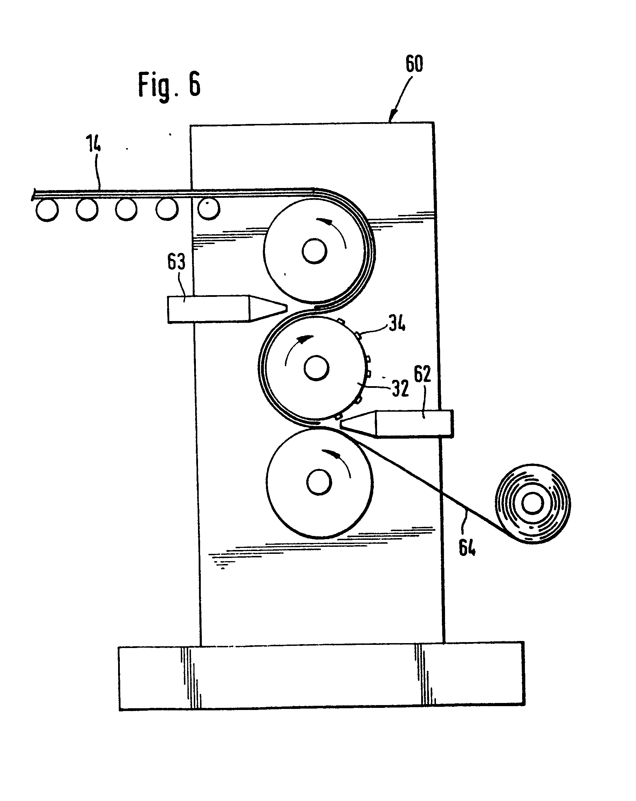

Fig. 6 zeigt schematisch eine als Walzenglättmaschine ausgebildete Walzenanordnung 60. Diese Walzenanordnung 60 weist insgesamt drei Walzen auf, wobei die mittlere Walze 32 der in Fig. 1 dargestellten Walze entspricht. Von zwei Extrudern sind Breitschlitzdüsen 62, 63 schematisch angedeutet, durch welche Bahnen aus thermoplastischem Kunststoff in die Walzenspalte eingeführt werden. Es reicht grundsätzlich die eine Breitschlitzdüse 62 aus. Der Walzenanordnung 60 wird ferner eine Bahn 64 aus einem textilen Gewebe zugeführt, das zwischen die Bahnen aus thermoplastischem Kunststoff eingebettet wird. Die Walze 32 weist die hier stark vergrösserten Bolzen 34 zur Erzeugung der Vertiefungen in der Oberfläche 14 auf. Die in der Zeichnung oben links aus der Walzenanordnung 60 heraustretende, kontinuierlich gefertigte Bahn wird nach Abkühlung in gewohnter Weise auf das gewünschte Mass in einzelne Platten zurechtgeschnitten. Durch die Integration der Walze 32 in die Walzenanordnung, bei welcher wenigstens eine Breitschlitzdüse unmittelbar in einen Spalt zwischen zwei Walzen den thermoplastischen Kunststoff liefert, erfolgt bei minimalem Energieaufwand das Prägen der Oberfläche gleichzeitig bei der Herstellung der Bahn, aus welcher dann die Platte geschnitten wird.

**Patentansprüche**

1. Vorrichtung zur Herstellung von Platten (6) aus einem insbesondere thermoplastischem Kunststoff, welche bevorzugt als eine Walze (32), Presse oder Giessform ausgebildet ist, und auf ihrer Aussenfläche (38) in einer vorgegebenen räumlichen Zuordnung nach innen gerichtete Senken zur Erzeugung von tropfen- oder perlenartigen Strukturen in der Platte (6) aufweist, wobei die Aussenfläche (38) aus einem harten Werkstoff, insbesondere Metall, besteht, dadurch gekennzeichnet, dass auf der Aussenfläche (38) Bolzen (34) angeordnet sind, welche über die eine vorgegebene Oberflächenstruktur aufweisende Aussenfläche (38) mit einer Höhe (44) vorstehen, dass die Bolzen (34) in ihren äusseren Stirnflächen (39) die nach innen gerichteten Senken (40) aufweisen, dass die am weitesten nach innen gerichteten Teile (42) der Senken (40) höchstens bis zur Aussenfläche (38) reichen und dass die Höhe (44) der Bolzen (34) maximal 40 Prozent der Wandstärke der herzustellenden Platten beträgt.

2. Vorrichtung nach Anspruch 1, dadurch gekennzeichnet, dass die Bolzen (34) auf der fertig bearbeiteten Aussenfläche (38) befestigt sind, die insbesondere geschlichtet, feinst gedreht oder hochglanzpoliert ist, wobei die Befestigung insbesondere durch Schweissen, Löten, Einpressen oder Schrauben in Ausnehmungen (46) der Aussenfläche (38) erfolgt ist.

3. Vorrichtung nach Anspruch 2, dadurch gekennzeichnet, dass der Bolzen (34) mit einem Aussengewinde (52) in ein Innengewinde (48) der Ausnehmung eingeschraubt ist und mit einem Teil einer zylindrischen Fläche in das Innengewinde (48) eingepresst ist, dessen Länge (54) grösser ist als die Länge des Aussengewindes (52).

4. Vorrichtung nach Anspruch 1, dadurch gekennzeichnet, dass die Bolzen (34) durch teilweises Abtragen einer ersten Aussenfläche (36) bis zur genannten Aussenfläche (38) hergestellt sind.

5. Vorrichtung nach einem der Ansprüche 1 bis 4, dadurch gekennzeichnet, dass die Senken (40) durch Einschlagen oder Einpressen eines Kornes, Niethammers, Pressstempels oder dergleichen in die äusseren Stirnflächen (39) eingebracht sind.

6. Vorrichtung nach einem der Ansprüche 1 bis 5, dadurch gekennzeichnet, dass die Höhe (44) der Bolzen (34) 2 mm, bevorzugt 0,6 bis 0,8 mm, gross ist.

7. Vorrichtung nach einem der Ansprüche 1 bis 6, dadurch gekennzeichnet, dass die Bolzen (34) einen Durchmesser (22) bzw. eine Breite bis zu 60 mm, bevorzugt 20 mm, insbesondere von 3 bis 9 mm, aufweisen.

8. Platte, insbesondere für eine Duschtrennwand, aus einem thermoplastischem Kunststoff, welche Platte mittels der Vorrichtung nach einem der Ansprüche 1–7 hergestellt ist, dadurch gekennzeichnet, dass in der Oberfläche (14) Vertiefungen (8) vorgesehen sind, deren Bodenflächen (20) die tropfen- oder perlenartige Strukturen aufweisen, deren am weitesten nach oben gerichtete Teil zumindest näherungsweise in oder unterhalb der Oberfläche (14) liegt.

9. Platte nach Anspruch 8, dadurch gekennzeichnet, dass die Vertiefungen (8) eine Tiefe (18) von max. 2 mm, bevorzugt 0,6 bis 0,8 mm, aufweisen und/oder einen Durchmesser (22) bzw. eine Breite bis zu 60 mm, bevorzugt 20 mm, insbesondere von 3 bis 9 mm, aufweisen.

10. Platte nach Anspruch 9, welche in eine Nut eine insbesondere als Klemmprofil ausgebildeten Profilschiene (10) einsetzbar ist, dadurch gekennzeichnet, dass der Durchmesser (22) bzw. die Breite der Vertiefung (8) kleiner ist als die Breite (24) einer Nutwand (16), der die Nut bildenden Schenkel (15).

**Claims**

1. Apparatus for producing panels (6) of a plastics material, more particularly a thermoplastic plastics material, the apparatus preferably being in the form of a roller (32), press or mould, and having on its outer surface (38), in a predetermined spatial relationship, inwardly directed depressions for producing drop-shaped or bead-shaped structures in the panel (6), the outer surface (38) consisting of a hard material, more particularly metal, characterised in that, on the outer surface (38), studs (34) having a predetermined surface structure are provided which project beyond the outer surface (38) to a height (44), the studs (34) have the inwardly directed depressions (40) in their outer end faces (39), the parts (42) of the depressions (40) which are directed furthest inwards reach at most to the outer surface (38) and the height (44) of the studs (34) is not more than 40 percent of the wall thickness of the panels which are to be produced.

2. Apparatus according to claim 1, characterised in that the studs (34) are secured to the outer surface (38) which has been finished, more particularly smoothed, superfinish turned or highly polished, the studs being secured more particularly by welding, soldering, forcing or screwing into recesses (46) in the outer surface (38).

3. Apparatus according to claim 2, characterised in that the stud (34) with an external thread (52) is screwed into an internal thread (48) in the recess and with a part of cylindrical surface forced into the internal thread (48), the length (54) of which is greater than the length of the external thread (52).

4. Apparatus according to claim 1, characterised in that the studs (34) are produced by partially removing a first outer surface (36) down to the above-mentioned outer surface (38).

5. Apparatus according to one of claims 1 to 4, characterised in that the depressions (40) are produced by striking or impressing with a punch, riveting hammer, pressing die or the like into the outer end faces (39).

6. Apparatus according to one of claims 1 to 5, characterised in that the height (44) of the studs (34) is 2 mm, preferably 0.6 to 0.8 mm.

7. Apparatus according to one of claims 1 to 6, characterised in that the studs (34) have a diameter (22) or a width of up to 60 mm, preferably 20 mm, more particularly from 3 to 9 mm.

8. Panel, more particularly for a shower partition, of a thermoplastic plastics material, the panel being produced by means of the apparatus according to one of claims 1 to 7, characterised in that depressions (8) are provided in the surface (14), the bases (20) of which have the drop-shaped or bead-shaped structures, the part of which directed furthest upwards is at least approximately at or below the surface (14).

9. Panel according to claim 8, characterised in that the depressions (8) have a depth (18) of not more than 2 mm, preferably 0.6 to 0.8 mm, and/or a diameter (22) or a width of up to 60 mm, preferably 20 mm, more particularly from 3 to 9 mm.

10. Panel according to claim 9 which can be inserted in a groove of a rail section (10) which is constructed particularly as a clamping section, characterised in that the diameter (22) or width of the depression (8) is less than the width (24) of a groove wall (16), of the legs (15) which form the groove.

## Revendications

1. Dispositif pour la fabrication de plaques (6) faites en particulier d'une matière synthétique thermoplastique, qui est de préférence constitué par un rouleau (32), une presse ou un moule et qui présente sur sa surface extérieure (38), et dans une disposition prédéterminée, des dépressions dirigées vers l'intérieur destinées à produire des structures en forme de gouttes ou de perles dans la plaque (6), la surface extérieure (38) étant faite d'une matière dure, notamment de métal, caractérisé en ce que sur la surface extérieure (38) sont disposées des chevilles (34) qui font saillie sur une hauteur (44) au-dessus de la surface extérieure (38) présentant une structure de surface prédéterminée, en ce que les chevilles (34) présentent les dépressions (40) dirigées vers l'intérieur dans leurs surfaces frontales extérieures (39), en ce que les parties (42) des dépressions (40) qui sont dirigées le plus loin vers l'intérieur atteignent au maximum la surface extérieure (38) et en ce que la hauteur (44) des chevilles (34) atteint au maximum 40% de l'épaisseur de paroi des plaques à fabriquer.

2. Dispositif selon la revendication 1, caractérisé en ce que les chevilles (34) sont fixées sur la surface extérieure (38) finie, qui est en particulier lissée, finement tournée ou finie au poli spéculaire, la fixation s'effectuant en particulier par soudage, brasage, enfoncement à la presse ou vissage, dans des évidements (46) de la surface extérieure (38).

3. Dispositif selon la revendication 2, caractérisé en ce que la cheville (34) est vissée au moyen d'un filetage extérieur (52) dans un filetage intérieur (48) de l'évidement et est enfoncée en force, par une partie de sa surface cylindrique, dans le filetage intérieur (48) dont la longueur (54) est plus grande que la longueur du filetage extérieur (52).

4. Dispositif selon la revendication 1, caractérisé en ce que les chevilles (34) sont fabriquées par enlèvement partiel d'une première surface extérieure (36) jusqu'à la surface extérieure (38) précitée.

5. Dispositif selon l'une des revendications 1 à 4, caractérisé en ce que lés dépressions (40) sont formées dans les surfaces frontales extérieures (39) par frappe ou pression au moyen d'un poinçon, rivoir, poinçon de presse ou équivalent.

6. Dispositif selon l'une des revendications 1 à 5, caractérisé en ce que la hauteur (44) des chevilles (34) est de 2 mm, de préférence de 0,6 à 0,8 mm.

7. Dispositif selon l'une des revendications 1 à 6, caractérisé en ce que les chevilles (34) présentent un diamètre (22) ou une largeur pouvant atteindre 60 mm, de préférence 20 mm et en particulier de 3 à 9 mm.

8. Plaque, en particulier pour une cloison de douche, en matière synthétique thermoplastique, laquelle plaque est fabriquée au moyen du dispositif selon l'une des revendications 1 à 7, caractérisée en ce que, dans la surface (14) sont prévues des cavités (8) dont la surface de fond (20) présente une structure en forme de goutte ou de perle dont la partie qui est dirigée le plus loin vers le haut se trouve au moins approximativement dans ou au-dessous de la surface (14).

9. Plaque selon la revendication 8, caractérisée en ce que les cavités (8) présentent une profondeur (18) de 2 mm au maximum, de préférence de 0,6 à 0,8 mm et/ou un diamètre (22) ou une largeur pouvant atteindre 60 mm, qui est de préférence de 20 mm et en particulier de 3 à 9 mm.

10. Plaque selon la revendication 9, qui peut être encastrée dans une rainure d'un profilé (10) présentant en particulier la forme d'un profilé à serrage, caractérisée en ce que le diamètre (22) ou la largeur de la cavité (8) est plus petite que la largeur (24) d'un flanc de rainure (16), de la branche (15) qui forme la rainure.

Fig. 1

Fig. 2

Fig. 3

Fig. 4

Fig. 5

Fig. 6